# FASCICULE DE BREVET EUROPEEN

(11) **EP 1 871 583 B1**
(45) Date de publication et mention de la délivrance du brevet: **03.08.2011**
(21) Numéro de dépôt: 06726030.7
(22) Date de dépôt: 06.03.2006
(51) Int. Cl.: B29C 33/02, B29C 70/88, B29C 70/86, B29C 70/44, H05B 3/20

(54) **DISPOSITIF STRATIFIE CHAUFFANT ET METHODE DE PRODUCTION D' UN TEL DISPOSITIF**
LAMINIERTE HEIZVORRICHTUNG UND HERSTELLUNGSVERFAHREN DAFÜR
LAMINATED HEATING DEVICE AND METHOD FOR PRODUCING SAME

(30) Priorité: 05.04.2005 FR 0503370
(43) Date de publication de la demande: 02.01.2008
(73) Titulaire: Jallais, 44018 Nantes Cedex (FR)
(72) Inventeur: SEVESTRE, Ivan, F-44230 St Sébastien sur Loire (FR); LUKSEMBERG, Simon, F-44300 Nantes (FR)
(74) Mandataire: Tournel, Jean Louis
(86) Numéro de dépôt international: PCT/FR2006/000498
(87) Numéro de publication internationale: WO 2006/106195

(56) Documents cités:
- FR-A- 1 230 668
- FR-A- 2 637 534
- GB-A- 2 172 542
- US-A- 3 387 333
- US-A- 6 146 576

## Description

La présente invention a pour objet un dispositif stratifié chauffant tel un outillage pour la réalisation de préformes fibreuses ou autres pièces selon la revendication 1.

Elle a également pour objet le procédé d'intégration d'un câble électrique chauffant dans un stratifié contenant des fibres de carbone selon la revendication 7.

On connaît déjà des dispositifs chauffants de réalisation de préformes avec auges, poinçons et bâches à vide pour la petite et moyenne série ou avec moule et contre moule sous presse pour la grande série, et dont l'apport de chaleur pour la fluidification du liant est fourni soit par des radians, soit par des étuves.

Toutefois, ces dispositifs présentent des cycles de fabrication très longs, une inertie thermique importante et sont très consommateurs d'énergie.

Le document US-3 387.333 divulgue un dispositif stratifié chauffant selon le ppréambule de la revendication 1.

La présente invention a pour but de remédier à ces inconvénients en proposant un dispositif stratifié chauffant selon la revendication 1, permettant par rapport au dispositif actuel de réduire les temps des cycles de fabrication, la consommation d'énergie et d'obtenir une inertie thermique plus faible.

La présente invention a également pour objet un procédé d'integration d'un câble électrique chauffant dans un dispositif stratifié selon la revendication 7.

Les avantages et les caractéristiques de la présente invention ressortiront plus clairement de la description qui suit et qui se rapporte au dessin annexé sur lequel on représente plusieurs modes de réalisation non limitatifs.
La figure 1 représente une vue en coupe longitudinale du dispositif selon la présente invention dans un mode de réalisation préférentiel.
La figure 2 représente une vue en coupe transversale du dispositif selon la présente invention.
La figure 3 représente une vue en perspective du poinçon chauffant.

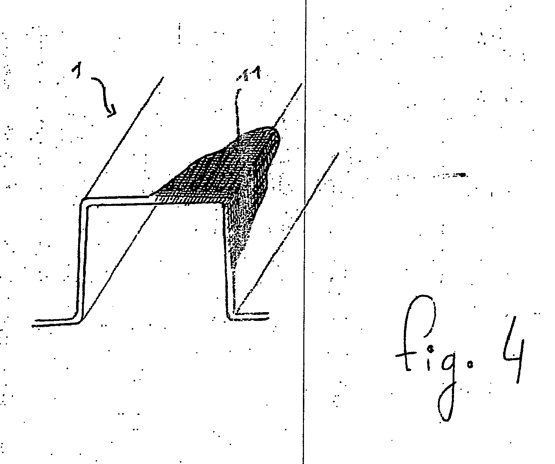

La figure 4 représente une vue de dessus du système électrique chauffant du poinçon.
La figure 5 représente une vue en perspective de la structure du matériau chauffant d'une coiffe chauffante destinée à être posée au dessus de la préforme.
Les figures 6 à 8 montrent les étapes d'intégration d'un câble électrique dans un stratifié.
Les figures 9 à 11 montrent une variante des étapes d'intégration d'un câble électrique dans un stratifié.

Pour simplifier la description, on fera uniquement référence à un outillage stratifié chauffant destiné à constituer un outillage de préformage ou de moulage mais il peut d'agir d'un objet tel un siège chauffant ou autres.

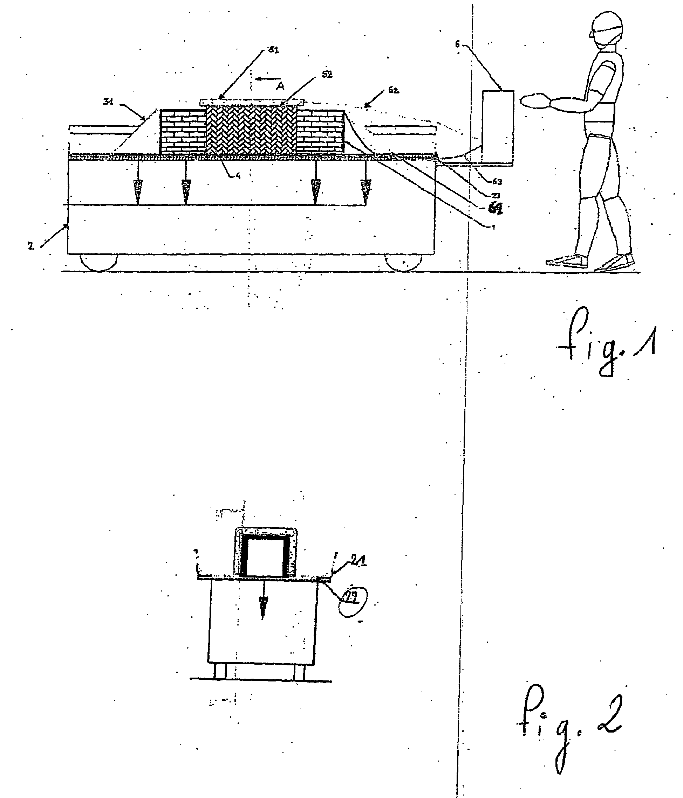

Si on se réfère aux figures 1 et 2, on voit qu'un dispositif de réalisation de préforme fibreuse 4 selon la présente invention comprend un châssis 2 supportant une auge 21 comportant en son fond un caillebotis 22 et des connecteurs électriques 23 étanches au vide susceptibles d'établir une continuité électrique à travers l'auge 21.

Un poinçon 1 ou outillage 1 est disposé sur le caillebotis 22 dans l'auge 21.

Le poinçon 1 est réalisé par moulage en matériau composite composé d'une résine polymère, par exemple du type époxy ou polyimide et de renforts fibreux de type carbone.

La résine polymère sera résistante à une température d'au moins 180°C.

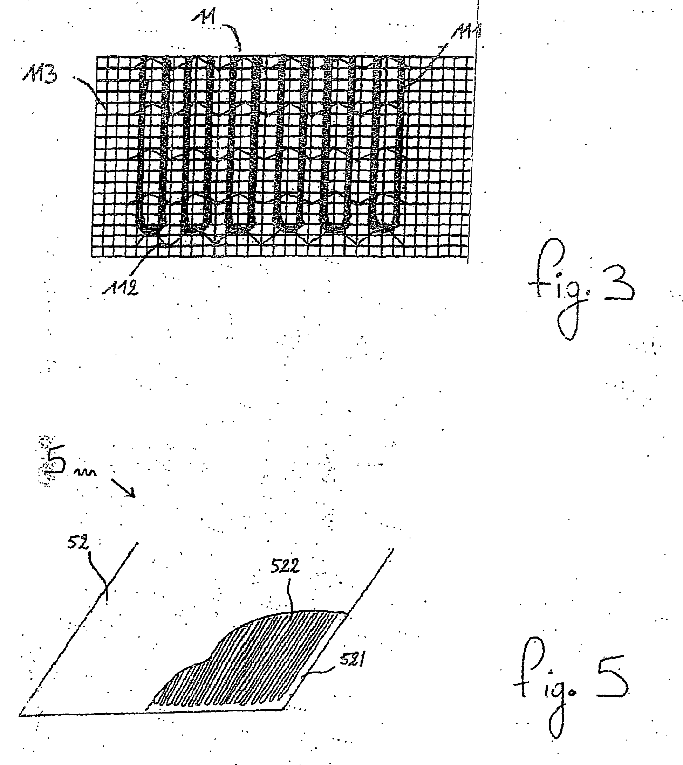

Si on se réfère maintenant à la figure 3, on peut voir que le poinçon 1 comporte dans sa masse, intégré lors de sa fabrication, un système électrique chauffant 11 qui est composé d'un ou plusieurs circuits de câbles électriques résistants isolés par une gaine 111 de type silicone, lesquels câbles électriques sont fixés sur une grille métallique 113 déformable au moyen d'un fil de couture 112. Celui-ci peut être, par exemple, un fil de nylon de polyester ou de coton.

On se réfère à nouveau aux figures 1 et 2, on peut voir que le dispositif comprend également un système de mise sous vide 3 comportant d'une part une bâche 31 à vide souple en silicone prise dans un cadre étanche et rigide: et d'autre part une coiffe chauffante 5 disposée au dessus de la préforme 4 au contact de la bâche à vide 31.

Le cadre a pour fonction de plaquer la préforme 4 entre la bâche 31 et le poinçon 1 lorsque l'on crée une dépression. dans l'auge 21.

Si on se réfère à la figure 5, on peut voir que la coiffe chauffante 5 comporte une structure 51 légère et isolante et un matériau chauffant 52 du type bâche silicone comportant dans sa masse et intégré lors de sa fabrication un système électrique chauffant composé d'un ou plusieurs circuits de résistances électriques 522.

Le matériau chauffant 52 est tapissé et collé à l'intérieur de la structure isolante 51 pour former la coiffe chauffante 5.

On notera que ladite coiffe chauffante 5 pourrait aussi sans sortir du cadre de la présente invention être réalisée dans le même matériau que ledit poinçon 1.

Le poinçon 1 et la coiffe 5 sont susceptibles de chauffer la préforme 4 à une température supérieure à 160°C lorsque ladite préforme 4 est prise sous vide de la bâche à vide 31 et le poinçon 1. A cette température, le liant thermoplastique de la préforme dont est imprégnée la fibre devient moins visqueux et permet après refroidissement de figer la forme de la préforme 4.

Un équipement, électrique 6 fixé au châssis de l'auge est susceptible de fournir une alimentation électrique 61, 62 au poinçon et à la coiffe, de collecter des mesures de températures et de pression par des sondes 63, de programmer différents cycles de chauffe, et de réguler la température en surface du poinçon et de la coiffe pendant les cycles.

L'intégration d'un câble électrique chauffant dans un stratifié pose différents problèmes. -Déformation en surface de l'outillage due au retrait différentiel de la résine et maîtrise des zones de chauffage.

Pour répondre à ce problème :
d'une part, on minimisera le retrait en optimisant le taux de renfort (carbone) entre les câbles. Pour cela on transformera le matériau sous sac à vide pour que les plis extérieurs pénètrent entre les câbles et ainsi homogénéisent le taux de renfort dans le matériau,
et d'autre part, on effectuera un moulage en deux temps en polymérisant dans un premier temps le stratifié de surface, puis en ajoutant le système chauffant qui est pris dans la masse du stratifié.

Pour obtenir une bonne tenue à la température des matériaux engagés, le poinçon sera réalisé à partir d'une résine par exemple époxy (Tg > 180°C) et de fibres de carbone. Pour la maîtrise du chauffage, le fil électrique est positionné sur une grille qui sera, par exemple, en aluminium type « moustiquaire ».

Les résistances électriques seront logées dans une gaine isolante électriquement en silicone (Tmax 205°C).

Le fil de couture est en nylon ou en polyester.

Le matériau chauffant de la coiffe sera en silicone.

Problème de stabilité dimensionnelle et vieillissement cyclique du poinçon chauffant. La dilatation thermique différentielle entre le renfort et, la résine provoque l'endommagement du matériau.

Pour remédier à ce problème, le poinçon sera réalisé dans un stratifié époxy et carbone présentant une bonne résistance à la température et une faible dilatation thermique. Enfin, le taux de carbone massique important (de l'ordre de 40 à 60 %) permettra d'optimiser le comportement du poinçon.

Il s'agit donc d'un dispositif stratifié chauffant tel un outillage de moulage ou préformage en résine polymère intégrant un système électrique chauffant 11 et présentant une face dite de moulage.

Par face de moulage, on comprendra également une face de préformage c'est à dire une face de référence pour l'objet à mouler ou à préformer, l'objet devant se calquer sur cette face.

Ainsi, le système chauffant est constitué d'au moins un circuit de câbles électriques résistants isolés par une gaine (111) lequel circuit est disposé entre deux couches 200, 300 de résine chargée de fibres de carbone.

Le circuit de câbles électriques est formé d'un ou plusieurs câbles répartis selon une disposition préétablie.

Ainsi le câble peut être mis en zig zag ou autres répartitions selon les besoins du chauffage.

Le positionnement de ce câble électrique sur une grille souple permet de garantir la répartition de chauffe selon les besoins malgré les manipulations lors du processus de fabrication de cet objet chauffant.

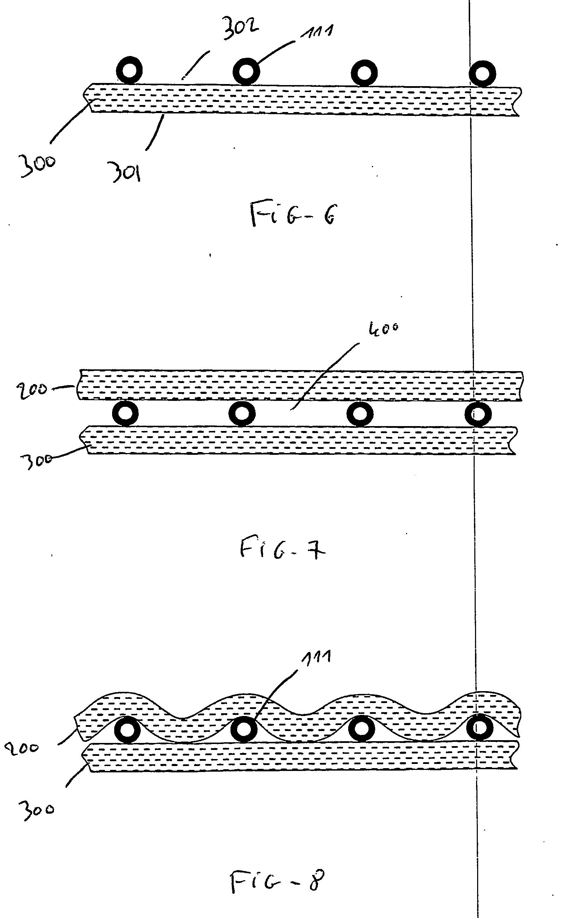

Donc, entre les tronçons de câbles électriques, il existe un espace 400 vide (figure 7) délimité par deux tronçons 211 de câbles la couche inférieure 300 et la couche supérieure 200.

L'espace entre les câbles électriques est comblé au moins partiellement par un matériau chargé qui homogénéise le taux de renfort.

On va ainsi établir une liaison chimique et mécanique entre les deux couches emprisonnant le circuit chauffant.

Du fait de la pénétration de la matière dans les espaces, on obtient une meilleur tenue de l'outillage.

Dans une forme de réalisation (figure 8), le comblement est réalisé par déplacement local de la couche de résine fibreuse située à l'opposée de la face de moulage.

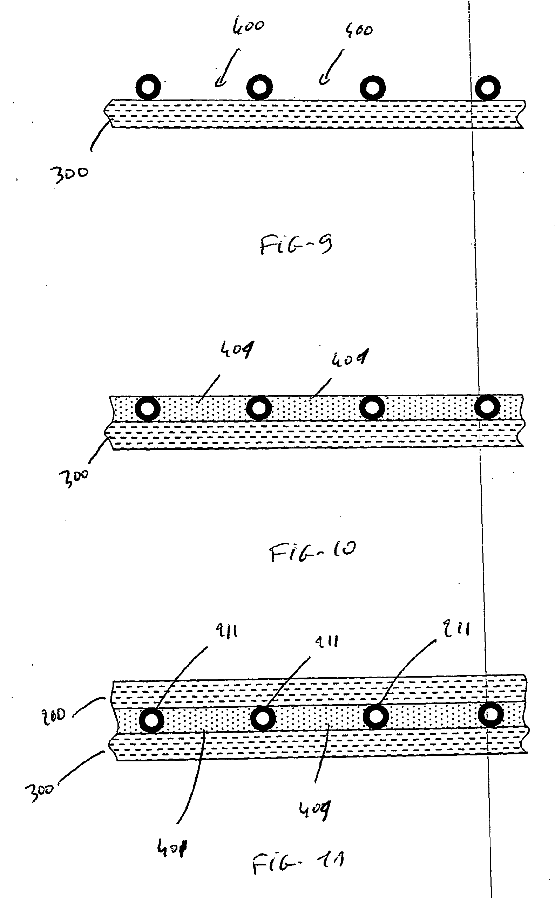

Dans un deuxième mode (figure 10, 11), le comblement est réalisé par une pâte 401 chargée ( par exemple, avec poudre ou fibres de carbone) avant mise en place de la deuxième couche 200 de résine chargée de fibres de carbone.

Le taux massique de carbone est compris entre 40 et 60%.

Les câbles électriques sont fixés sur une grille déformable en fibre de verre ou métallique ou autres matériaux.

Cela permet donc de répartir et de fixer la résistance électrique en fonction du chauffage recherché et de ne pas voir cette disposition modifiée lors de la mise en place de la deuxième couche. On maîtrise la puissance surfacique de chauffage et le gradient de température souhaitée.

L'outillage de moulage ou préformage est porté par un châssis (2) supportant une auge (21) comportant en son fond un caillebotis (22) et des connecteurs électriques étanches au vide. Il comprend un système de mise sous vide (3) comportant d'une part une bâche (31) à vide souple en silicone prise dans un cadre étanche et rigide et d'autre part une coiffe chauffante disposée au-dessus d'une préforme (4) au contact de la bâche à vide. On va décrire un exemple de procédé de fabrication.

Ainsi, pour fabriquer cet outillage et intégrer un câble électrique chauffant dans un stratifié contenant des fibres de carbone, on procède de la manière suivante:
on polymérise dans un premier temps un stratifié 300 de surface dont une 301 des faces est utilisée comme face de moulage,
sur l'autre face 302 on dépose le câble électrique gainé réparti sur la surface à chauffer et,
au plus tard avant de polymériser une deuxième couche de résine fibreuse dite couche arrière posée sur le câble électrique, on comble au moins partiellement les espaces entre les câbles.

Pour le comblement, soit on déplace partiellement la deuxième couche de résine chargée pour former des plis entre les câbles qui vont combler les espaces soit on comble les espaces entre les câbles par un apport de matériau 401 chargé.

En polymérisant la première couche, on va fixer la forme et les dimensions de la face de moulage.

Sur la face opposée à cette face de moulage, on peut ainsi venir rapporter le circuit chauffant puis la deuxième couche de résine chargée de fibres de carbone.

La polymérisation va fixer définitivement l'ensemble.

Par exemple, en transformant l'ensemble ainsi constitué dans un sac à vide, on va forcer la deuxième couche à combler les espaces 400 entre les câbles électriques.

Ce remplissage évite beaucoup d'effets indésirables telle une mise en température de l'air emprisonné dans l'espace vide qui en se dilatant va provoquer une détérioration de l'outil en stratifié de carbone.

Cela évite également des problèmes de conductions thermiques.

Il y a également une homogénéisation du retrait.

On peut utiliser des pré-imprégnés pour les couches de résine chargée de fibres de carbone mais également on peut travailler par voie humide (infusion).

Ainsi, le procédé comporte une étape de comblement des espaces 400 entre les câbles électriques.

L'utilisation de pré-imprégnés permet d'obtenir une meilleur reproductibilité.

## Revendications

1. Dispositif stratifié en résine polymère intégrant un système électrique chauffant (11) et présentant une face dite fonctionnelle,
le système chauffant étant constitué d'au moins un circuit de câbles électriques résistants isolés par une gaine (111) , **caractérisé en ce que** le circuit est fixé sur une grille déformable (113) et disposé entre deux couches de résine (200, 300) chargée de fibres de carbone et l'espace entre les câbles électriques (400) est comblé au moins partiellement par un matériau chargé *de fibres ou de poudre de carbone* qui homogénéise le taux de renfort *dans le dispositif stratifié*

2. Dispositif stratifié selon la revendication 1 **caractérisé en ce que** le comblement est réalisé par déplacement local de la couche de résine fibreuse située à l'opposée de la face de moulage.

3. Dispositif stratifié selon la revendication 1 **caractérisé en ce** le comblement est réalisé par *apport d'une* pâte chargée *de fibres ou de poudre de carbones* avant mise en place de la deuxième couche de résine chargée de fibres de carbone.

4. dispositif stratifié selon la revendication 1 **caractérisé en ce que** le taux massique de carbone étant compris entre 40 et 60%.

5. Dispositif stratifié selon l'une quelconque des revendications précédentes **caractérisé en ce qu'**il s'agit d'un outillage de moulage ou de préformage

6. Outillage de moulage ou préformage selon la revendication 5 **caractérisé en ce qu'**il comprend un système de mise sous vide (3) comportant, d'une part, une bâche (31) à vide souple en silicone prise dans un cadre étanche et rigide et, d'autre part, une coiffe chauffante disposée au-dessus d'une préforme (4 ) au contact de la bâche à vide.

7. Procédé d'intégration d'un câble électrique chauffant dans un stratifié contenant des fibres de carbone dans lequel
on polymérise dans un premier temps un stratifié de surface (300) dont une des faces (301) est utilisée comme face fonctionnelle,
sur l'autre face, on dépose le câble électrique gainé réparti sur la surface à chauffer et, au plus tard avant de polymériser une deuxième couche de résine fibreuse (200) dite couche arrière posée sur le cable électrique *lequel est fixé sur une grille déformable* (113), on comble au moins partiellement les espaces entre les câbles (400) *avec un matériau chargé de poudre ou de fibres de carbone pour une homogénéisation du taux de renfort dans le dispositif stratifié.*

8. Procédé d'intégration d'un câble électrique chauffant dans un stratifié selon la revendication 7 **caractérisé en ce qu'**on déplace partiellement la deuxième couche de résine chargée pour former des plis entre les câbles qui vont combler les espaces.

9. Procédé d'intégration d'un câble électrique chauffant dans un stratifié selon la revendication 7 ***caractérisé en ce qu'**on comble les espaces entre les câbles par un apport de matériau chargé en fibres ou poudre de carbone.*

## Claims

1. Laminated polymer resin device integrating an electrical heating system (11) and having a so-called functional face, the heating system consisting of at least one circuit of resistant electrical cables insulated by a sheath (111), **characterised in that** the circuit is fixed on a deformable grid (113) and arranged between two layers of resin (200, 300) filled with carbon fibres and the space between the electrical cables (400) is filled at least partially by a material filled with carbon *powder or fibres* which homogenises the reinforcement rate *in the laminated device.*

2. Laminated device according to claim 1, **characterised in that** the filling-in is performed by local displacement of the layer of fibrous resin situated opposite the moulding face.

3. Laminated device according to claim 1, **characterised in that** filling-in is performed by *application of a* paste filled *with carbon powder* or *fibres* before the second layer of resin filled with carbon fibres is applied.

4. Laminated device according to claim 1, **characterised in that** the mass rate of carbon being comprised between 40 and 60%.

5. Laminated device according to any of the preceding claims, **characterised in that** this is a moulding or preforming tool.

6. Moulding or preforming tool according to claim 5, **characterised in that** it comprises a system for placing under vacuum (3), comprising on the one hand a flexible silicone vacuum tank (31) placed in a waterproof and rigid frame, and on the other hand a heating cap arranged above a preform (4) in contact with the vacuum tank.

7. Process for the integration of an electrical heating cable in a laminate containing carbon fibres in which
first of all a surface laminate (300), one of the faces of which (301) is used as the functional face, is polymerised,
on the other face is arranged the sheathed electrical cable distributed on the surface to be heated and at the latest before polymerising a second layer of fibrous resin (200), said back layer, placed on the electrical cable *which is fixed on a deformable grid* (113), the spaces between the cables (400) are filled in at least partially *with a material filled with carbon powder or fibres for homogenisation of the reinforcement rate in the laminated device.*

8. Process for the integration of an electrical heating cable in a laminate according to claim 7, **characterised in that** the second layer of filled resin is partially displaced to form folds between the cables that will fill in the spaces.

9. Process for the integration of an electrical heating cable in a laminate according to claim 7, ***characterised in that** the spaces between the cables are filled in by application of material filled with carbon powder or fibres.*

## Patentansprüche

1. Schichtstoff-Vorrichtung aus Polymerharz, in die ein elektrisches Heizsystem (11) integriert ist und die eine so genannte Funktionsseite aufweist, wobei das Heizsystem von wenigstens einem Kreis widerstandsfähiger, durch eine Ummantelung (111) isolierter elektrischer Kabel gebildet ist, **dadurch gekennzeichnet, dass** der Kabelkreis auf einem verformbaren Gitter (113) befestigt und zwischen zwei mit Kohlenstofffasern verstärkten Harzschichten (200, 300) angeordnet ist, und der Zwischenraum (400) zwischen den elektrischen Kabeln wenigstens zum Teil durch ein mit Kohlenstofffasern oder Kohlepulver verstärktes Material ausgefüllt ist, das den Verstärkungsanteil in der Schichtstoff-Vorrichtung homogen gestaltet.

2. Schichtstoff-Vorrichtung nach Anspruch 1, **dadurch gekennzeichnet, dass** das Ausfüllen durch lokales Verschieben der Harzfaserschicht erfolgt, die auf der der Formungsseite entgegengesetzten Seite liegt.

3. Schichtstoff-Vorrichtung nach Anspruch 1, **dadurch gekennzeichnet, dass** das Ausfüllen durch Zufuhr einer mit Kohlenstofffasern oder Kohlepulver verstärkten Masse erfolgt, bevor die zweite kohlenstofffaserverstärkte Harzschicht aufgebracht wird.

4. Schichtstoff-Vorrichtung nach Anspruch 1, **dadurch gekennzeichnet, dass** der Kohlenstoff-Massenanteil zwischen 40 und 60 % liegt.

5. Schichtstoff-Vorrichtung nach einem der vorhergehenden Ansprüche, **dadurch gekennzeichnet, dass** es sich um ein Formpress- oder Vorformwerkzeug handelt.

6. Formpress- oder Vorformwerkzeug nach Anspruch 5, **dadurch gekennzeichnet, dass** es ein Evakuierungssystem (3) umfasst, das einerseits einen in einem dichten und starren Rahmen gehaltenen elastischen Vakuumbehälter (31) aus Silikon und andererseits eine über einem Vorformling (4) in Kontakt mit dem Vakuumbehälter angeordnete Heizkappe aufweist.

7. Verfahren zum Integrieren eines elektrischen Heizkabels in einen Kohlenstofffaser enthaltenden Schichtstoff, bei dem
ein Schichtstoff (300) an der Oberfläche in einem ersten Schritt polymerisiert wird, dessen eine Seite (301) als Funktionsseite verwendet wird,
auf der anderen Seite das ummantelte elektrische Kabel über die zu beheizende Fläche verteilt aufgebracht wird, und die Kabelzwischenräume (400) spätestens vor dem Polymerisieren einer als Rückseite bezeichneten zweiten Harzfaserschicht (200), die auf dem elektrischen Kabel aufgebracht ist, das auf einem verformbaren Gitter (113) befestigt ist, wenigstens zum Teil mit einem mit Kohlepulver oder Kohlenstofffasern verstärkten Material ausgefüllt werden, um den Verstärkungsanteil in der Schichtstoff-Vorrichtung homogen zu gestalten.

8. Verfahren zum Integrieren eines elektrischen Heizkabels in einen Schichtstoff nach Anspruch 7, **dadurch gekennzeichnet, dass** die zweite verstärkte Harzschicht zum Teil verschoben wird, um zwischen den Kabeln Falten zu bilden, welche die Zwischenräume ausfüllen.

9. Verfahren zum Integrieren eines elektrischen Heizkabels in einen Schichtstoff nach Anspruch 7, **dadurch gekennzeichnet, dass** die Kabelzwischenräume durch Zufuhr eines mit Kohlenstofffasern oder Kohlepulver verstärkten Materials ausgefüllt werden.
